# EUROPÄISCHE PATENTSCHRIFT

(11) **EP 2 918 202 B1**
(45) Veröffentlichungstag und Bekanntmachung des Hinweises auf die Patenterteilung: **15.03.2017**
(21) Anmeldenummer: 15153284.3
(22) Anmeldetag: 30.01.2015
(51) Int. Cl.: A47J 36/14

(54) **Auslasshahn mit Anschlusseinrichtung**
Outlet port with connection device
Robinet de vidange doté d'un dispositif de raccordement

(30) Priorität: 10.03.2014 DE 202014002209 U
(43) Veröffentlichungstag der Anmeldung: 16.09.2015
(73) Patentinhaber: Gebr. Echtermann GmbH & Co. KG, 58644 Iserlohn (DE)
(72) Erfinder: Redondo, Juan, 58636 Iserlohn (DE); Von Dreusche, Udo, 58644 Iserlohn (DE)
(74) Vertreter: Hoefer & Partner Patentanwälte mbB

(56) Entgegenhaltungen:
- WO-A2-2006/037253
- DE-U1- 20 009 723
- JP-A- 2006 312 463
- US-A- 4 778 152

## Beschreibung

Die vorliegende Erfindung betrifft einen Auslasshahn mit einer Anschlusseinrichtung zum Anschließen eines weiteren Zusatzteils, wie z.B. einer rohrförmigen Verlängerung oder einem Portionierer oder dergleichen.

Auslasshähne werden beispielsweise in Großküchen an Kochbehältern verwendet. Der Auslasshahn dient dabei zum Ablassen von Flüssigkeiten, wie z.B. Suppen, Soßen und dergleichen aus den Kochbehältern. Ein Auslasshahn umfasst üblicherweise ein Gehäuse und einen im Gehäuse drehbar angeordneten Kolben. Der Kolben kann üblicherweise über einen Handgriff betätigt werden und so eine Flüssigkeit aus einem Behälter abgelassen werden. Auslasshähne werden hauptsächlich in professionellen Küchen oder Großküchen verwendet. Ein Problemkreis hinsichtlich derartiger Behälter mit Auslasshahn hat sich nun dadurch ergeben, dass nach Umbauten einer Küche häufig eine geänderte Einbauposition des Behälters mit Auslasshahn vorhanden ist. Beispielsweise werden bei Neugestaltung von Küchen häufig die Arbeitsflächen höhergesetzt, um ein einfacheres Arbeiten zu ermöglichen. Hierbei werden jedoch häufig die bisher vorhandenen Kocheinrichtungen wiederverwendet. Dadurch ergibt sich bei Auslasshähnen häufig das Problem, dass der Auslasshahn nun an einer anderen Position als in der vorhergehenden Küche eingebaut ist. Dadurch ergeben sich veränderte Abstände, was beispielsweise beim Ablassen von Portionen in einen anderen Behälter aus dem Auslasshahn zu einem unerwünschten Spritzen und Verschmutzungen der Küche führen kann oder bisher verwendete Gefäße nicht mehr unter den Auslasshahn passen. Weiter haben Nutzer manchmal den Wunsch, Zusatzteile wie z.B. Portionierer an Auslasshähne anzuschließen. Auch besteht häufig ein Kundenwunsch, verschiedene Zusatzteile an einen Auslasshahn anzuschließen. Weiterhin ist aus der JP 2006 312463 A ein Auslasshahn gemäß dem Oberbegriff des Anspruchs 1 bekannt.

Es ist daher Aufgabe der vorliegenden Erfindung, einen Auslasshahn bereitzustellen, welcher eine erhöhte Flexibilität auch bei geänderten Einbausituationen ermöglicht und insbesondere das Anschließen von Zusatzteilen ermöglicht.

Diese Aufgabe wird durch einen Auslasshahn mit den Merkmalen des Anspruchs 1 gelöst. Die Unteransprüche zeigen bevorzugte Weiterbildungen der Erfindung.

Der erfindungsgemäße Auslasshahn mit den Merkmalen des Anspruchs 1 weist den Vorteil auf, dass er eine erhöhte Flexibilität auf geänderte Einbausituationen aufweist. Insbesondere können Zusatzteile, wie beispielsweise eine rohrförmige Verlängerung oder ein Portionierer problemlos am erfindungsgemäßen Auslasshahn angeordnet werden. Dies wird erfindungsgemäß dadurch erreicht, dass der Auslasshahn ein Gehäuse mit einem seitlichen Zulauf und einem Auslass sowie einem im Gehäuse um eine Drehachse drehbeweglich eingesetzten Kolben umfasst. Ferner ist an einem zweiten Ende des Auslasses eine Anschlusseinrichtung angeordnet, an welcher ein weiteres Zusatzteil anschließbar ist. Dabei umfasst die Anschlusseinrichtung einen am freien Ende des Auslasses angeordneten Flansch. Hierdurch kann ein Anschließen eines Zusatzteils an den Flansch auf einfache und sichere Weise ermöglicht werden. Ferner ist der Flansch ein separates Bauteil, welches am freien Ende des Auslasses befestigt ist. Hierdurch kann insbesondere auch eine Nachrüstung von Auslasshähnen ermöglicht werden, so dass eine Anpassung des Auslasshahnes an eine geänderte Einbausituation einfach und kostengünstig ausführbar ist. Die separate Anschlusseinrichtung ist mittels einer Verbindungsanordnung mit dem Auslass verbunden.

Der Flansch ist vorzugsweise ein radial nach außen vorstehender, umlaufender Flansch. Hierdurch kann ein Durchmesser des Auslasses beibehalten werden und das Zusatzbauteil an einem äußeren Umfang des Flansches befestigt werden.

Die Verbindungsanordnung umfasst bevorzugt ein an der Anschlusseinrichtung angeordnetes Innengewinde und ein am Auslass angeordnetes Außengewinde zur Aufnahme des Innengewindes der Anschlusseinrichtung. Somit kann eine Gewindeverbindung zwischen dem Auslass und der Anschlusseinrichtung bereitgestellt werden. Dadurch kann die Anschlusseinrichtung an einer Außenseite des Auslasses aufgeschraubt werden. Ein Innendurchmesser des Auslasses kann dabei unverändert bleiben. Alternativ umfasst die Verbindungsanordnung ein an der Anschlusseinrichtung vorgesehenes Außengewinde und ein am Auslass vorgesehenes Innengewinde. Ein Teil der Anschlussrichtung ist dabei im Inneren des Gehäuses des Auslasshahns angeordnet.

Zur Sicherung der Verbindung umfasst die Verbindungsanordnung ferner bevorzugt einen Klebstoff, welcher die Anschlusseinrichtung und den Auslass miteinander verklebt. Wenn die Verbindungsanordnung eine Gewindeverbindung umfasst, kann die Gewindeverbindung auch zusätzlich noch mit Klebstoff gesichert werden.

Weiter bevorzugt weist der Flansch eine umlaufende Nut auf und die Anschlusseinrichtung umfasst ferner ein Dichtelement, welches in der Nut angeordnet ist. Hierdurch kann auch noch eine Abdichtung zu dem am Auslass anzuordnenden Zusatzbauteil mittels des Dichtelements erfolgen.

Weiter bevorzugt umfasst die Anschlusseinrichtung ein ringförmiges Fixierelement, welches den Flansch umgreift und welches eingerichtet ist, das Zusatzteil am Flansch zu fixieren. Das Fixierelement ist vorzugsweise ein im Schnitt C-förmiges Element, welches dem Flansch am Auslass sowie vorzugsweise einen Flansch am Zusatzteil umschließt und beispielsweise mittels einer anziehbaren Schraubverbindung am Auslass und dem Zusatzteil befestigbar ist.

Weiter bevorzugt ist das Zusatzteil eine rohrförmige Verlängerung oder ein Portionierer zur Abgabe von portionsgerechten Mengen.

Nachfolgend werden bevorzugte Ausführungsbeispiele der Erfindung unter Bezugnahme auf die begleitende Zeichnung im Detail beschrieben. In der Zeichnung sind gleiche bzw. funktional gleiche Bauteile mit den gleichen Bezugszeichen bezeichnet. In der Zeichnung ist:
- Fig. 1: eine schematische, perspektivische Ansicht eines Auslasshahns gemäß einem ersten Ausführungsbeispiel der Erfindung,
- Fig. 2: eine schematische Seitenansicht des Auslasshahns von Fig. 1,
- Fig. 3: eine schematische Seitenansicht von einer anderen Seite des Auslasshahns von Fig. 1, wobei ein Teil des Auslasshahns als Schnitt dargestellt ist,
- Fig. 4: eine Seitenansicht eines Auslasshahns gemäß einem zweiten Ausführungsbeispiel der Erfindung und
- Fig. 5: eine schematische Seitenansicht von einer anderen Seite des Auslasshahns von Fig. 4, wobei ein Teil des Auslasshahns als Schnitt dargestellt ist.

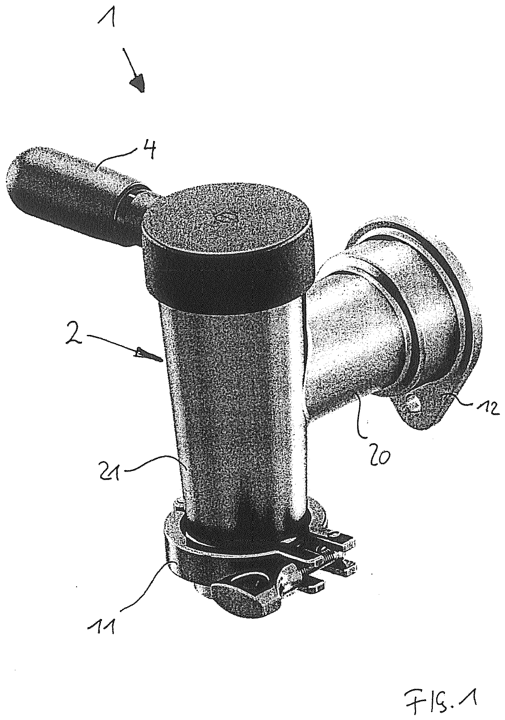

Nachfolgend wird unter Bezugnahme auf die Fig. 1 bis 3 ein Auslasshahn 1 gemäß einem ersten Ausführungsbeispiel der Erfindung im Detail beschrieben.

Der Auslasshahn 1 wird beispielsweise mit einem Kochbehälter verwendet und ist dabei an einem unteren Bereich des Kochbehälters angeordnet. Wie aus Fig. 1 ersichtlich ist, umfasst der Auslasshahn 1 dabei ein Gehäuse 2 mit einem Zulauf 20 und einem Auslass 21. Das Bezugszeichen 12 bezeichnet einen Befestigungsflansch, um den Auslasshahn 1 an einem Kochbehälter oder dergleichen zu befestigen.

Im Gehäuse 12 sitzt ein drehbarer Kolben 3, welcher mittels eines Handhebels 4 drehbar ist. Durch Drehung des Kolbens wird der Zulauf 20 freigegeben, so dass eine Flüssigkeit über den Zulauf 20 in den Auslass 21 strömen kann und aus diesem austreten kann. Der Zulauf 20 ist dabei seitlich am Auslass 21 angeordnet.

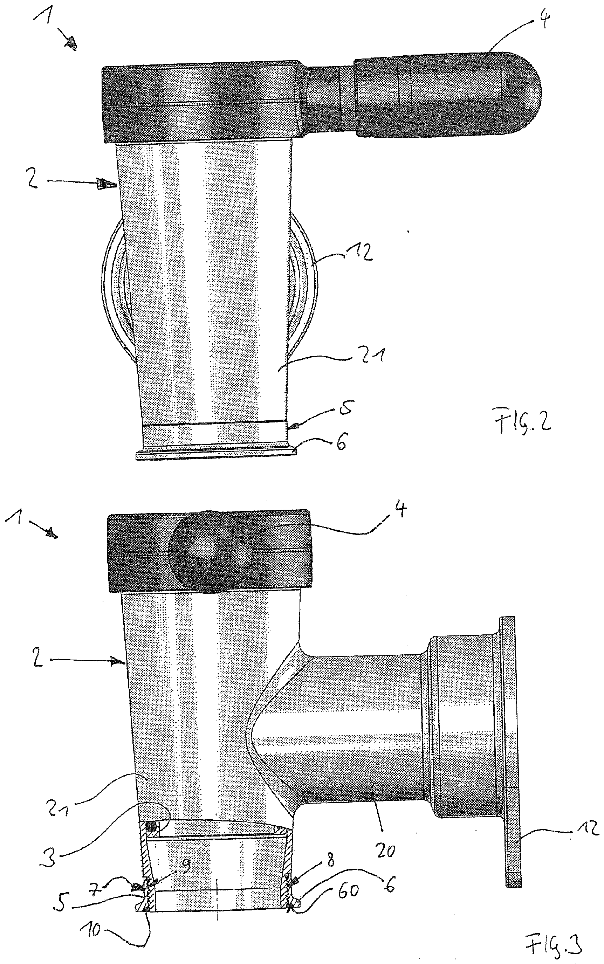

An einem freien Ende des Auslasses 21 ist ferner eine Anschlusseinrichtung 5 angeordnet ist. Die Anschlusseinrichtung 5 ist insbesondere im Detail aus den Fig. 2 und 3 ersichtlich. Die Anschlusseinrichtung 5 umfasst einen Flansch 6, welcher radial nach außen vorsteht. Der Flansch 6 ist dabei umlaufend gebildet. Die Anschlusseinrichtung 5 ist mittels einer Verbindungsanordnung 7 mit dem Auslass 21 verbunden. Genauer umfasst die Verbindungsanordnung 7 ein am freien Ende des Auslasses 21 angeordnetes Außengewinde 8 und ein am inneren Umfang der Anschlusseinrichtung 5 angeordnetes Innengewinde 9. Die Fig. 2 und 3 zeigen dabei den montierten Zustand der Anschlusseinrichtung 5.

Wie insbesondere aus Fig. 3 ersichtlich ist, kann somit die Anschlusseinrichtung 5 durch Aufschrauben ihres Innengewindes 9 auf das Außengewinde 8 am Auslass 21 am Auslasshahn 1 befestigt werden. Hierbei wird zusätzlich noch Klebstoff in die Gewindeverbindung eingebracht, um eine zusätzliche Sicherung der Verbindung zwischen Anschlusseinrichtung 5 und Auslass 21 zu erreichen.

An dem radial nach außen vorstehenden Flansch 6 kann nun ein Zusatzteil, wie beispielsweise eine Rohrverlängerung oder ein Portionierer, angeschlossen werden. Hierzu ist, wie aus Figur 1 ersichtlich, ein Fixierelement 11 vorgesehen. Das Fixierelement 11 ist eine umlaufende Manschette, welche mittels eines Schraubelements am Flansch 6 und einem entsprechend am Zusatzteil gebildeten Flansch (nicht gezeigt) fixiert werden kann.

Somit kann erfindungsgemäß auf einfache Weise ein Zusatzteil am Auslasshahn befestigt werden, um somit auf geänderte geometrische Gegebenheiten, beispielsweise basierend auf einen Küchenumbau oder dergleichen, reagiert werden. Hierbei kann insbesondere auch eine einfache Nachrüstung der Verbindungsanordnung 7 an einen bestehenden Auslasshahn 1 ermöglicht werden. Hierzu muss lediglich ein Außengewinde 8 am freien Ende des Auslasses 21 geschnitten werden, so dass dann auf einfache Weise die Anschlusseinrichtung 5 aufgeschraubt werden kann.

Damit das Zusatzbauteil dicht am Auslasshahn 1 befestigt werden kann, ist am Flansch 6 ferner eine Nut 60 ausgebildet, in welche eine Dichtung 10, beispielsweise ein O-Ring, eingelegt wird. Der O-Ring dichtet dann an einer entsprechend gebildeten Anschlussfläche des Zusatzteils ab.

Durch die Verwendung des Fixierelements 11 kann weiterhin eine hohe Flexibilität für den Auslasshahn 1 erreicht werden, so dass auch andere Zusatzteile schnell ausgewechselt bzw. angeschlossen werden können. Hierdurch erhält der Auslasshahn 1 eine zusätzliche Variabilität.

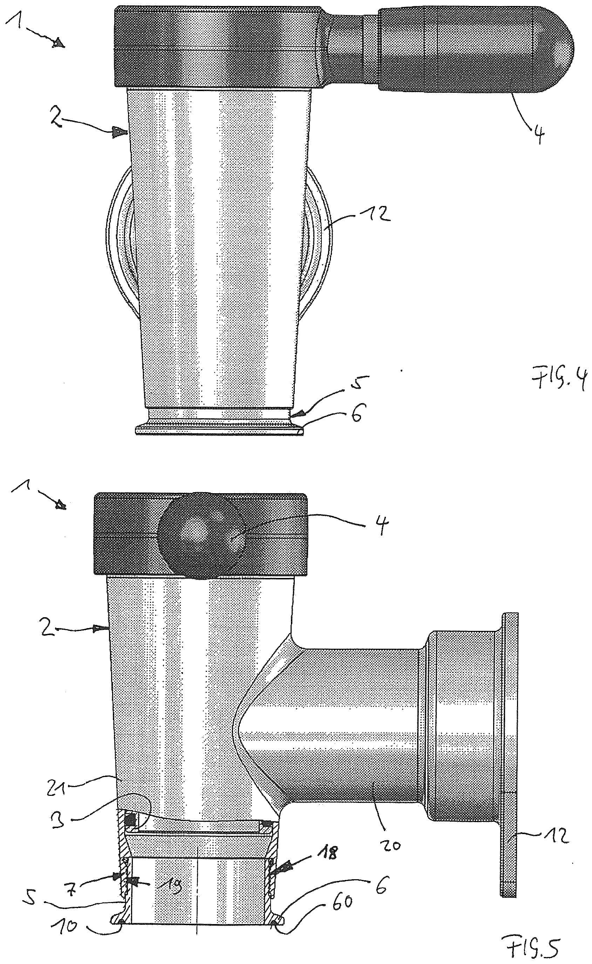

Die Fig. 4 und 5 zeigen einen Auslasshahn 1 gemäß einem zweiten Ausführungsbeispiel der Erfindung. Im Unterschied zum ersten Ausführungsbeispiel ist beim zweiten Ausführungsbeispiel die Verbindungsanordnung 7 unterschiedlich gebildet. Wie aus Fig. 5 ersichtlich ist, umfasst die Verbindungsanordnung 7 ein Außengewinde 18, welches an der Anschlusseinrichtung 5 vorgesehen ist. Am freien Ende des Auslasses 21 ist ein Innengewinde 19 vorgesehen. Somit wird die Anschlusseinrichtung 5 teilweise in den Auslass 21 eingeschraubt, wie aus Fig. 5 ersichtlich ist. Ein Auslassdurchmesser am Auslass 21 wird dabei nicht verändert, so dass immer noch die gleichen Mengen aus dem Auslasshahn 1 in gleicher Zeit abgelassen werden können. Hierbei kann ebenfalls zusätzlich noch ein Klebstoff zur Sicherung der Gewindeverbindung in das Gewinde eingebracht werden. Eine Befestigung eines Zusatzteils erfolgt dann wie im ersten Ausführungsbeispiel beschrieben.

Somit kann erfindungsgemäß ein Auslasshahn 1 derart gestaltet werden, dass auf einfache Weise Zusatzteile, wie Rohrverlängerungen, Portionierer oder dergleichen, angeschlossen werden können. Dabei kann der Auslasshahn 1 selbstverständlich auch ohne derartige Zusatzteile verwendet werden. Durch die Möglichkeit der Nachrüstung der Anschlusseinrichtung 5 kann somit auch einfach und schnell auf veränderte Gegebenheiten reagiert werden.

### Bezugszeichenliste

- 1: Auslasshahn
- 2: Gehäuse
- 3: Kolben
- 4: Handhebel
- 5: Anschlusseinrichtung
- 6: Flansch
- 7: Verbindungsanordnung
- 8: Außengewinde
- 9: Innengewinde
- 10: Dichtung
- 11: Fixierelement
- 12: Befestigungsflansch
- 18: Außengewinde
- 19: Innengewinde
- 20: Zulauf
- 21: Auslass
- 60: Nut

## Patentansprüche

1. Auslasshahn, umfassend
- ein Gehäuse (2) mit einem seitlichen Zulauf (20) und einem Auslass (21), und
- einen im Gehäuse (2) um eine Drehachse drehbeweglich eingesetzten Kolben (3),
**gekennzeichnet durch**
- eine an einem freien Ende des Auslasses (21) angeordnete Anschlusseinrichtung (5), an welcher ein weiteres Zusatzteil anschließbar ist,
- wobei die Anschlusseinrichtung (5) einen Flansch umfasst,
- wobei die Anschlusseinrichtung (5) ein separates Bauteil ist, und
- wobei die Anschlusseinrichtung (5) mittels einer Verbindungsanordnung (7) mit dem Auslass (21) verbunden ist.

2. Auslasshahn nach Anspruch 1, **dadurch gekennzeichnet, dass** der Flansch ein radial nach außen vorstehender, umlaufender Flansch ist.

3. Auslasshahn nach Anspruch 1, **dadurch gekennzeichnet, dass** die Verbindungsanordnung (7) an der Anschlusseinrichtung (5) ein Innengewinde (8) umfasst und am Auslass (21) ein Aussengewinde (9) zur Aufnahme des Innengewindes (8) umfasst.

4. Auslasshahn nach Anspruch 1, **dadurch gekennzeichnet, dass** die Verbindungsanordnung (7) an der Anschlusseinrichtung (5) ein Außengewinde (18) umfasst und am Auslass (21) ein Innengewinde (19) zur Aufnahme des Außengewindes (18) umfasst.

5. Auslasshahn nach einem der Ansprüche 1 bis 4, **dadurch gekennzeichnet, dass** die Verbindungsanordnung (7) einen Klebstoff umfasst, welcher die Anschlusseinrichtung (5) mit dem Auslass (21) verklebt.

6. Auslasshahn nach einem der Ansprüche 1 bis 5, **dadurch gekennzeichnet, dass** der Flansch (6) eine umlaufende Nut (60) aufweist und die Anschlusseinrichtung (5) ferner ein Dichtelement (10) umfasst, wobei das Dichtelement (10) in der Nut (60) angeordnet ist.

7. Auslasshahn nach einem der Ansprüche 1 bis 6, **dadurch gekennzeichnet, dass** die Anschlusseinrichtung (5) ein ringförmiges Fixierelement (11) umfasst, welches den Flansch (6) umgreift, und welches eingerichtet ist, das Zusatzteil am Flansch (6) zu fixieren.

8. Auslasshahn nach einem der vorhergehenden Ansprüche, **dadurch gekennzeichnet, dass** das Zusatzteil eine rohrförmige Verlängerung oder ein Portionierer ist.

## Claims

1. Outlet tap, comprising
- a housing (2) having a lateral inflow (20) and an outlet (21), and
- a piston (3) that is inserted in the housing (2) in such a manner that said piston can rotate about an axis of rotation,
**characterized by** means of
- a connecting device (5) that is arranged on a free end of the outlet (21) and it is possible to connect a further additional part to said connecting device,
- wherein the connecting device (5) comprises a flange,
- wherein the connecting device (5) is a separate component, and
- wherein the connecting device (5) is connected by means of a connecting arrangement (7) to the outlet (21).

2. Outlet tap according to Claim 1, **characterized in that** the flange is a circumferential flange that protrudes radially outwards.

3. Outlet tap according to Claim 1, **characterized in that** the connecting arrangement (7) comprises an inner thread (8) on the connecting device (5) and an outer thread (9) on the outlet (21) for receiving the inner thread (8).

4. Outlet tap according to Claim 1, **characterized in that** the connecting arrangement (7) comprises an outer thread (18) on the connecting device (5) and an inner thread (19) on the outlet (21) for receiving the outer thread (18).

5. Outlet tap according to any one of the claims 1 to 4, **characterized in that** the connecting arrangement (7) comprises a bonding material that bonds the connecting device (5) to the outlet (21).

6. Outlet tap according to any one of the claims 1 to 5, **characterized in that** the flange (6) comprises a circumferential groove (60) and the connecting device (5) moreover comprises a sealing element (10), wherein the sealing element (10) is arranged in the groove (60).

7. Outlet tap according to any one of the claims 1 to 6, **characterized in that** the connecting device (5) comprises an annular fixing element (11) that encompasses the flange (6) and that is configured so as to fix the additional part to the flange (6).

8. Outlet tap according to any one of the preceding claims, **characterized in that** the additional part is a pipe-shaped extension or a metering device.

## Revendications

1. Robinet de sortie comprenant
- un boîtier (2) avec une amenée latérale (20) et une sortie (21) et
- un piston (3) inséré de manière mobile en rotation dans le boîtier (2) autour d'un axe de rotation,
**caractérisé par**
- un dispositif de raccordement (5) agencé sur une extrémité libre de la sortie (21), auquel une autre partie supplémentaire peut être raccordée,
- dans lequel le dispositif de raccordement (5) comporte une bride,
- dans lequel le dispositif de raccordement (5) est un composant séparé et
- dans lequel le dispositif de raccordement (5) est relié à l'aide d'un agencement de liaison (7) à la sortie (21).

2. Robinet de sortie selon la revendication 1, **caractérisé en ce que** la bride est une bride tournante dépassant radialement vers l'extérieur.

3. Robinet de sortie selon la revendication 1, **caractérisé en ce que** l'agencement de liaison (7) comporte sur le dispositif de raccordement (5) un filet intérieur (8) et sur la sortie (21) un filet extérieur (9) pour la réception du filet intérieur (8).

4. Robinet de sortie selon la revendication 1, **caractérisé en ce que** l'agencement de liaison (7) comporte sur le dispositif de raccordement (5) un filet extérieur (18) et sur la sortie (21) un filet intérieur (19) pour la réception du filet extérieur (18).

5. Robinet de sortie selon l'une quelconque des revendications 1 à 4, **caractérisé en ce que** l'agencement de liaison (7) comporte une colle qui colle le dispositif de raccordement (5) à la sortie (21).

6. Robinet de sortie selon l'une quelconque des revendications 1 à 5, **caractérisé en ce que** la bride (6) présente une rainure tournante (60) et le dispositif de raccordement (5) comporte de plus un élément étanche (10), dans lequel l'élément étanche (10) est agencé dans la rainure (60).

7. Robinet de sortie selon l'une quelconque des revendications 1 à 6, **caractérisé en ce que** le dispositif de raccordement (5) comporte un élément de fixation annulaire (11) qui entoure la bride (6) et qui est aménagé afin de fixer la partie supplémentaire sur la bride (6).

8. Robinet de sortie selon l'une quelconque des revendications précédentes, **caractérisé en ce que** la partie supplémentaire est un prolongement tubulaire ou un élément de partition.
